# EUROPÄISCHE PATENTSCHRIFT

(11) **EP 0 909 914 B1**
(45) Veröffentlichungstag und Bekanntmachung des Hinweises auf die Patenterteilung: **20.11.2002**
(21) Anmeldenummer: 98115037.8
(22) Anmeldetag: 11.08.1998
(51) Int. Cl.: F16L 15/02

(54) **Anschlussgarnitur mit kraftschlüssigem Längenausgleich**
Connecting fitting with frictional length adjustment
Assemblage de raccordement avec rattrapage de la longeur à friction

(30) Priorität: 18.10.1997 DE 19746175
(43) Veröffentlichungstag der Anmeldung: 21.04.1999
(73) Patentinhaber: Wilhelm Ewe GmbH & Co. KG, 38104 Braunschweig (DE)
(72) Erfinder: Brand, Siegfried, 38110 Braunschweig (DE)
(74) Vertreter: Rehmann, Thorsten, Dipl.-Ing.

(56) Entgegenhaltungen:
- DE-C- 884 256
- DE-U- 1 843 874
- US-A- 2 329 935

## Beschreibung

Die Erfindung betrifft eine Anschlußgarnitur mit Längenausgleich zum Verbinden von Rohrleitungen, insbesondere Wasserleitungen mit Armaturen und/oder Zählern, bestehend aus einer rohrförmigen, mit einem über Teilbereiche verlaufenden Gewinde versehenen Hülse zum einendigen Einschrauben in ein eine Dichtfläche aufweisendes Gegenstück und einer am anderen Ende vorgesehenen Überwurfmutter.

Solche Anschlußgarnituren sind beispielsweise aus der DE-A-884 256 bekannt und werden von diversen Herstellern als Wasserzähler-Anschlußgarnituren vertrieben. Mit ihnen kann eine Wasserleitung direkt oder unter Zwischenschaltung eines Ventiles oder dergleichen an einem Zähler angeschlossen werden. Um eine sichere und paßgenaue Montage zu ermöglichen, ist diese Anschlußgarnitur mit einem Längenausgleich versehen. Die an einem Ende mit einem Außengewinde versehene Hülse wird in das mit einem entsprechenden Innengewinde versehenen Gegenstück eingeschraubt. Durch entsprechendes tieferes Hineindrehen der Hülse in das Gegenstück kann die Länge ausgeglichen werden. Mit der Überwurfmutter wird die Anschlußgarnitur dann mit dem Zähler oder dergleichen verbunden.

Um die Hülse gegen das Gegenstück abzudichten, ist dieses mit einer axialen Dichtfläche und einem Außengewinde versehen. Eine weitere Überwurfmutter wird auf das Außengewinde des Gegenstücks aufgedreht und quetscht dabei eine Dichtung axial gegen das Gegenstück und ihre Innenseite. Um das Hinein- und insbesondere bei starken Inkrustationen auch das Herausdrehen der Hülse aus dem Gegenstück zu gewährleisten ist die Hülse an ihrem äußeren Umfang mindestens mit zwei diametralen Abflachungen versehen, an denen ein Maulschlüssel angesetzt werden kann.

Diese bekannten Anschlußgarnituren haben zwei besondere Nachteile. Zum einen benötigt der Handwerker mindestens zwei Maulschlüssel, um die Anschlußgarnitur fachmännisch zu montieren. Einen, mit dem die Hülse in das Gegenstück hinein- oder herausgeschraubt wird und einen weiteren, mit größerer Maulweite zum festschrauben der Überwurfmuttern. Um den Montageaufwand zu reduzieren, den zwei unterschiedliche Maulschlüssel erfordern, wird vom Monteur vielfach nur eine verstellbare Zange verwendet. Wird diese nicht sehr sorgfältig eingestellt, sind Beschädigungen der aus einem relativ weichen Werkstoff (Messing) gefertigten Anschlußgarnitur nicht ausgeschlossen. Außerdem liegt durch die Abdichtung zwischen Hülse und Gegenstück hinter dem Gewinde das in das Gegenstück hineingedrehte Gewinde voll im Medium und ist diesem ausgesetzt. Starke Inkrustationen können dann dazu führen, daß die Hülse aus dem Gegenstück nicht mehr herausgeschraubt werden kann, ohne diese zu zerstören. Auch bildet sich unter Umständen innerhalb der Gewindegänge ein Raum, in dem das Medium (Wasser) steht und trotz Strömung nicht am Austausch teilnimmt. Hierdurch ist eine Verkeimung des Trinkwassers nicht ausgeschlossen.

Letztendlich haben die bekannten Anschlußgarnituren den Nachteil, daß beim Festschrauben bzw. Anlegen der Anschlußgarnitur am Zähler der Dichtring, der innerhalb der Überwurfmutter liegt, nicht sichtbar ist, weil die Überwurfmutter nur soweit zurückgeschoben werden kann, bis sie an die Überwurfmutter, die die Hülse mit dem Gegenstück befestigen soll, anstößt. Es gehört also viel Erfahrung dazu, die Hülse soweit aus dem Gegenstück herauszuschrauben, daß die nicht sichtbare Dichtung sicher und in funktionserfüllender Weise an der Dichtfläche am Zähler anliegt. Wird dabei nicht sorgfältig gearbeitet, ist eine Verquetschung der Dichtung möglich, bevor die Überwurfmutter aufgeschraubt wird. Ebenso ist es nicht ausgeschlossen, daß der Anschluß nicht paßgenau ausgeführt wird und dann durch das Aufschrauben der Überwurfmutter auf den Zähler das System verspannt wird.

Von dieser Problemstellung ausgehen soll die eingangs erläuterte Anschlußgarnitur verbessert werden.

Zur Problemlösung ist die Überwurfmutter in ihrem Innenumfang polygonal ausgebildet und die Hülse weist zwischen dem überwurfmutterseitigem Ende und dem Gewinde einen zu dem Innenumfang der Überwurfmutter komplementär ausgebildeten Außenumfang auf.

Durch diese Ausgestaltung kann die Überwurfmutter, mit der die Anschlußgarnitur am Wasserzähler angeflanscht wird gleichzeitig als "Schlüssel" für die Hülse dienen. Durch Aufschieben der Überwurfmutter auf den entsprechend ausgebildeten polygonalen Außenumfang der Hülse sind Überwurfmutter und Hülse drehfest miteinander verbunden. Über die Überwurfmutter kann nun die Hülse aus dem Gegenstück heraus- oder in dieses hineingeschraubt werden. Sofern die Verschraubung schwergängig ist, kann der Monteur denselben Schlüssel verwenden, mit dem zuvor die Überwurfmutter gelöst wurde bzw. später festgeschraubt werden soll. Einund Ausbau der Anschlußgarnitur sind folglich wesentlich erleichtert. Da nur paßgenaue Schlüssel verwendet werden, ist eine Beschädigung der Anschlußgarnitur wirksam ausgeschlossen.

Durch die erfindungsgemäße Ausbildung kann die Überwurfmutter vollständig zurückgeschoben werden. Folglich ist die zählerseitige Dichtung bei der Montage bzw. Demontage einsehbar. Sie wird nicht wie bei bisher bekannten Anschlußgarnituren von der Überwurfmutter abgedeckt. Dadurch kann die Anschlußgarnitur absolut paßgenau an den Zähler angesetzt werden, ohne daß bereits vorher die Dichtung verquetscht wird. Undichtigkeiten oder Längsspannungen im System, die aus einer unsachgemäßen Montage resultieren, können dadurch ausgeschlossen werden.

Vorzugsweise ist die polygonale Kontur achteckig ausgebildet.

Wenn die Hülse an ihrem der Überwurfmutter abgewandten Ende mindestens eine Dichtung aufweist, ist die vorzugsweise mehrgängig ausgebildete Gewindeverbindung zwischen Hülse und Gegenstück völlig aus dem Bereich des Mediums genommen. Inkrustationen werden dadurch vermieden. Auch ist die Gefahr der Verkeimung durch abgestandenes Trinkwasser innerhalb der Gewindegänge ausgeschlossen. Vorzugsweise sind zwei Dichtungen vorgesehen, um die Dichtwirkung zu erhöhen. Eine kostengünstige Abdichtung ist möglich, wenn die Dichtungen handelsübliche O-Ringe sind.

Mit Hilfe einer Zeichnung soll die Erfindung nachfolgend näher erläutert werden. Es zeigt:
- Figur 1 -: eine typische Einbausituation der Anschlußgarnitur;
- Figur 2 -: die Anschlußgarnitur im Teilschnitt;
- Figur 3 -: die Überwurfmutter im Schnitt;
- Figur 4 -: die Ansicht der Überwurfmutter gemäß Sichtpfeil IV nach Figur 3.

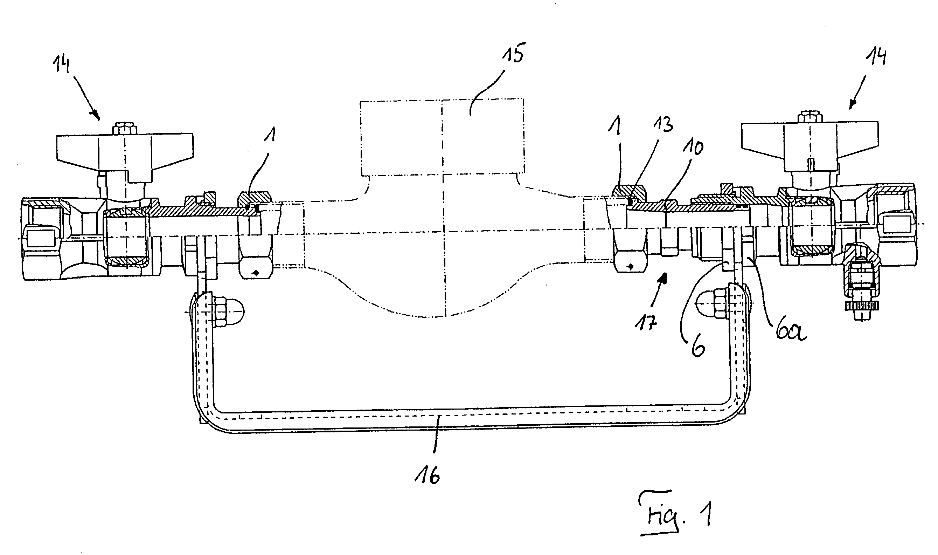

Figur 1 zeigt einen Wasserzähler 15, der über einen Befestigungsbügel 16 an einer Wand oder dergleichen befestigt werden kann. Beidseitig zum Wasserzähler 15 sind Anschlußstücke vorgesehen, über die der Wasserzähler 15 mit der hier nicht näher dargestellten ankommenden und der abgehenden Wasserleitung unter Zwischenschaltung von Abstellorgangen 14 verbunden werden kann. Um Längsspannungen und dadurch auf den Bügel 16 wirkende Kräfte zu vermeiden, ist auf einer Seite eine Anschlußgarnitur 17 mit Längenausgleich vorgesehen.

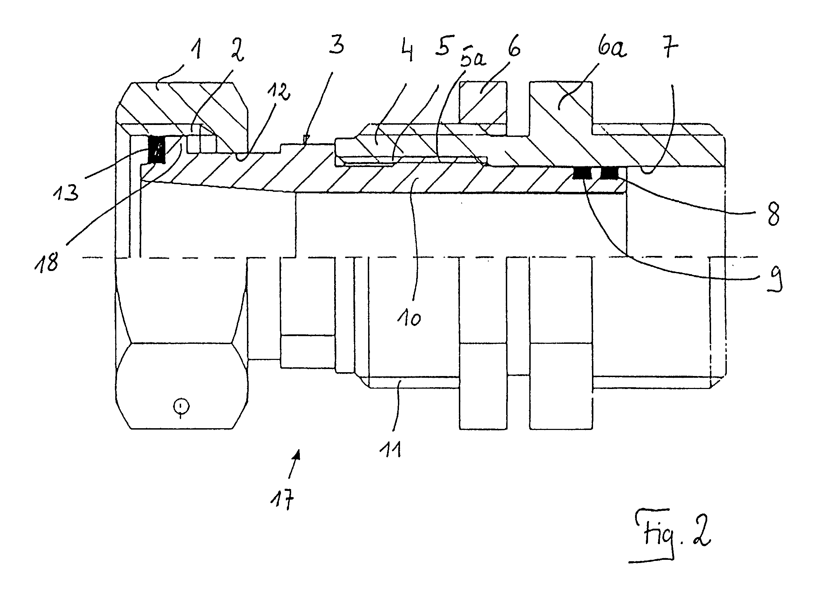

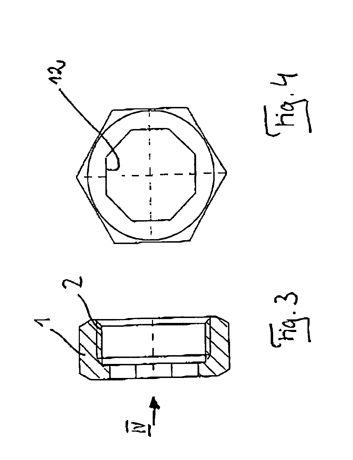

Die Ausgestaltung der Anschlußgarnitur 17 ist der Figur 2 entnehmbar. Sie besteht aus der rohrförmigen Hülse 10, die zwischen ihren beiden Enden mit einem Außengewinde 5a versehen ist, das in ein entsprechendes Innengewinde 5 an dem Gegenstück 4 eingeschraubt werden kann. Die Innenbohrung des Gegenstücks 4 ist hinter dem Innengewinde 5 als Dichtfläche 7 ausgebildet. Zwischen dem Außengewinde 5a der Hülse 10 und ihrem einen Ende sind nahe des Endes zwei O-Ringe 8, 9 vorgesehen, die die Abdichtung übernehmen und somit die Gewindeverbindung 5, 5a von Wasser frei halten. An ihrem anderen Ende ist die Hülse 10 mit einer Überwurfmutter 1 versehen, die in üblicher Weise gegen einen Anschlag 18 anläuft und über die die Anschlußgarnitur 17 über das Innengewinde 2 mit dem Wasserzähler 15 verbunden wird.

Die Innenkontur 12 der Überwurfmutter 1 ist nicht wie bisher üblich rund, sondern polygonal ausgebildet. Vor dem Außengewinde 5a der Hülse 10 ist diese mit einer der Innenkontur 12 der Überwurfmutter 1 angepaßten Außenkontur 3 versehen. Das heißt, die Hülse 10 hat einen der Überwurfmutter 1 entsprechenden achteckigen Außenumfang. Die Überwurfmutter 1 kann mit ihrer Innenkontur 12 folglich auf die Außenkontur 3 der Hülse 10 aufgesetzt werden und geht dann mit der Hülse eine drehfeste Verbindung ein. Entweder kann direkt über die Überwurfmutter 1 oder mit Hilfe des auf die Überwurfmutter 1 aufsetzbaren Maulschlüssels die Hülse 10 in das Gegenstück 4 hinein- oder aus diesem herausgedreht werden. Dadurch, daß die Überwurfmutter 1 bei in das Gegenstück 4 eingesetzter Hülse 10 bis an das Gegenstück 4 herangeschoben werden kann, ist die Dichtung 13, die die Anschlußgarnitur 17 zum Wasserzähler hin dichtet bei der Montage bzw. Demontage einsehbar. Bei der Montage kann die Hülse 10 aus dem Gegenstück 4 folglich so weit herausgedreht werden, bis beobachtbar ist, daß die Dichtung 13 an ihrer entsprechenden Dichtstelle am Wasserzähler 15 anliegt, eine Dichtwirkung erzielt wird und erst dann wird die Überwurfmutter 1 auf das entsprechende Außengewinde aufgedreht. Eine Verspannung des Zählers 15 im Befestigungsbügel 13 durch eine nicht ganz sorgfältige Arbeitsweise des Monteurs ist dadurch ausgeschlossen.

Das Außengewinde 5a der Hülse 10 ist vorzugsweise als Mehrganggewinde ausgebildet. Über das am Gegenstück 4 vorgesehene Außengewinde 11, das mit der Überwurfmutter 6 zusammenwirkt, und dem radialen Vorsprung 6a des Gegenstücks 4 wird die Anschlußgarnitur an dem Bügel 16 befestigt, so daß der Zähler 15 getragen wird.

### Bezugszeichenliste

- 1: Überwurfmutter
- 2: Innengewinde/Gewinde
- 3: polygonale Außenkontur
- 4: Gegenstück
- 5: Innengewinde
- 5a: Außengewinde
- 6: Mutter
- 6a: Schlüsselansatz /radialer Ansatz
- 7: Dichtfläche
- 8: Dichtung/O-Ring
- 9: Dichtung/O-Ring
- 10: Hülse
- 11: Außengewinde
- 12: polygonale Innenkontur
- 13: Dichtung
- 14: Ventil/Abstellorgan
- 15: Wasserzähler
- 16: Bügel/Befestigungsbügel
- 17: Anschlußgarnitur
- 18: Anschlag

## Patentansprüche

1. Anschlußgarnitur mit Längenausgleich zum Verbinden von Rohrleitungen, insbesondere Wasserleitungen, mit Armaturen und/oder Zählern, bestehend aus einer rohrförmigen mit einem über Teilbereiche verlaufenden Gewinde versehenen Hülse zum einendigen Einschrauben in ein eine Dichtfläche aufweisendes Gegenstück und einer am anderen Ende vorgesehenen Überwurfmutter (1) **dadurch gekennzeichnet, daß** die Überwurfmutter (1) in ihrer Innenkontur (12) polygonal ausgebildet ist und die Hülse (10) zwischen dem überwurfmutterseitigem Ende und dem Gewinde (5a) einen zu der Innenkontur (12) der Überwurfmutter (1) komplementär ausgebildete Außenkontur (3) aufweist.

2. Anschlußgarnitur nach Anspruch 1, **dadurch gekennzeichnet, daß** die polygonale Kontur (3, 12) achteckig ist.

3. Anschlußgarnitur nach Anspruch 1, **dadurch gekennzeichnet, daß** die Hülse (10) an ihrem der Überwurfmutter (1) abgewandten Ende mindestens eine Dichtung (8, 9) aufweist.

4. Anschlußgarnitur nach Anspruch 3, **dadurch gekennzeichnet, daß** zwei Dichtungen (8, 9) vorgesehen sind.

5. Anschlußgarnitur nach Anspruch 3 oder 4, **dadurch gekennzeichnet, daß** die Dichtungen (8, 9) O-Ringe sind.

6. Anschlußgarnitur nach einem oder mehreren der vorstehenden Ansprüche, **dadurch gekennzeichnet, daß** das Gewinde (5a) mehrgängig ausgebildet ist.

## Claims

1. Connecting kit with length-adjustment for connecting pipe conduits, in particular water conduits, to fittings and/or meters, the said connecting kit consisting of a tubular sleeve provided with a thread extending over partial regions, for screwing, at one end, into a counterpart having a sealing face, and of a union nut (1) provided at the other end, **characterised in that** the union nut (1) is of polygonal construction in its internal contour (12) and the sleeve (10) has, between the end on the union nut side and the thread (5a), an external contour (3) which is complementary to the internal contour (12) of the union nut (1).

2. Connecting kit according to claim 1, **characterised in that** the polygonal contour (3, 12) is octagonal.

3. Connecting kit according to claim 1, **characterised in that** the sleeve (10) has at least one seal (8, 9) at its end that is averted from the union nut (1).

4. Connecting kit according to claim 3, **characterised in that** two seals (8, 9) are provided.

5. Connecting kit according to claim 3 or 4, **characterised in that** the seals (8, 9) are O-rings.

6. Connecting kit according to one or more of the preceding claims, **characterised in that** the thread (5a) is multiple-threaded.

## Revendications

1. Assemblage de raccordement avec rattrapage de longueur pour relier des canalisations, en particulier des canalisations d'eau, avec des équipements et/ou des compteurs, constitué par un manchon tubulaire comprenant un filetage s'étendant sur des zones partielles pour être vissé à une extrémité dans une contre-pièce présentant une surface d'étanchéité, et par un écrou de raccordement (1) prévu à l'autre extrémité, **caractérisé en ce que** l'écrou de raccordement (1) est réalisé polygonal sur son contour intérieur (12) et le manchon (10) présente entre son extrémité côté écrou de raccordement et le filetage (5a) un contour extérieur réalisé complémentaire (3) du contour intérieur (12) de l'écrou de raccordement (1).

2. Assemblage de raccordement selon la revendication 1, **caractérisé en ce que** le contour polygonal (3, 12) est octogonal.

3. Assemblage de raccordement selon la revendication 1, **caractérisé en ce qu'**à son extrémité opposée à l'écrou de raccordement (1) le manchon (10) présente au moins une étanchéité (8, 9).

4. Assemblage de raccordement selon la revendication 3, **caractérisé en ce qu'**il est prévu deux étancbéités (8, 9).

5. Assemblage de raccordement selon la revendication 3 ou 4, **caractérisé en ce que** les étanchéités (8, 9) sont des joints toriques.

6. Assemblage de raccordement selon une ou plusieurs des revendications précédentes, **caractérisé en ce que** le filetage (5a) est réalisé à plusieurs filets.
